# EUROPEAN PATENT SPECIFICATION

(11) **EP 3 309 657 B1**
(45) Date of publication and mention of the grant of the patent: **10.01.2024**
(21) Application number: 17187238.5
(22) Date of filing: 22.08.2017
(51) Int. Cl.: G06F 3/01

(54) **ROLE-BASED PROVISION OF VIRTUAL REALITY ENVIRONMENT**
ROLLENBASIERTE BEREITSTELLUNG EINER VIRTUELLEN REALITÄTSUMGEBUNG
FOURNITURE D'ENVIRONNEMENT DE RÉALITÉ VIRTUELLE BASÉE SUR LES RÔLES

(30) Priority: 23.08.2016 IN 201641028617; 16.05.2017 US 201715596567
(43) Date of publication of application: 18.04.2018
(73) Proprietor: Accenture Global Solutions Limited, Dublin 4 (IE)
(72) Inventor: SHAFER, Ian C., Tabernacle, NJ New Jersey 08088 (US); AMER, Spencer, New York, NY 10028 (US); BATRA, Rishi, 201301 Uttar Pradesh (IN); KANG, Daniel L., Chicago, IL Illinois 60610 (US); LANIER, Ruth Ann, New York, NY New York 10065 (US)
(74) Representative: Müller-Boré & Partner Patentanwälte PartG mbB

(56) References cited:
- WO-A1-2014/134196
- WO-A1-2016/130161
- WO-A2-2016/071244
- US-A1- 2013 293 468

## Description

### BACKGROUND

Virtual reality (VR) may refer to computer technologies that use software to generate realistic images, sounds, and other sensations that replicate a real environment (or create an imaginary setting), and simulate a user's physical presence in the environment. VR may be defined as a realistic and immersive simulation of a three-dimensional environment, created using interactive software and hardware, and experienced or controlled by movement of the body. For example, in a VR scene, a person using special electronic equipment, such as a helmet with a display inside, goggles with a display inside, or the like, may interact with a computer-generated simulation of a three-dimensional image or environment in a seemingly real or physical way.
WO 2016/130161 A1 relates to a role-based information distribution system which comprises a display to provide an image containing multiple dynamic icons. It further comprises a wearable device camera to capture the image, and processing logic, coupled to the camera, to interpret the multiple dynamic icons and to provide information pertaining to a selected one or more of the multiple dynamic icons to a user via the wearable device. The processing logic selects the selected one or more of the multiple dynamic icons based on a role associated with the user.
WO 2016/071244 A2 relates to a communication system for a plurality of users in an emergency room or operating room environment, in particular for use in hospitals in order to efficiently assist in communication in a complex environment. The communication system for a plurality of users of wearable capturing devices comprises a circuit (identification circuit) comprising program logic arranged to identifying, by a second wearable device, the viewpoint of the first wearable device; a circuit (exchange circuit) comprising program logic arranged to causing the first wearable device wearer to exchange the captured viewpoint with a second wearable device wearer; and a circuit (projecting circuit) comprising program logic arranged to providing the exchanged viewpoint by the second wearable device as an exchanged viewpoint to the second wearable device wearer.
US 2013/293468 A1 relates to a see-through, near-eye, mixed reality display device and system for collaboration amongst various users of other such devices and personal audio/visual devices of more limited capabilities. One or more wearers of a see through head mounted display apparatus define a collaboration environment. For the collaboration environment, a selection of collaboration data and the scope of the environment are determined. Virtual representations of the collaboration data in the field of view of the wearer, and other device users are rendered. Persons in the wearer's field of view to be included in collaboration environment and who are entitled to share information in the collaboration environment are defined by the wearer. If allowed, input from other users in the collaboration environment on the virtual object is received and allowed to manipulate a change in the virtual object.
WO 2014/134196 relates to a computer aided system, apparatus and method for addressing routine and emergency situations. An electronic command device is operable to receive a command, such that the command device provides at least one of a visual and audio representation of at least one instruction for addressing the situation in response to the command. A target electronic device receives an order from the command device and provides at least one of a visual and audio representation of the order. The electronic command device and the target device communicate with each other to monitor the status of carrying out the command.

### SUMMARY

It is an object of the invention to technically assist people by using devices capable of rendering computer-modified views.

This object is solved according to the invention by the features of the independent claims. Particular embodiments are subject of the dependent claims.

### BRIEF DESCRIPTION OF THE DRAWINGS

Fig. 1A and 1B are diagrams of an overview of an example implementation described herein;
Fig. 2 is a diagram of an example environment in which systems and/or methods, described herein, may be implemented;
Fig. 3 is a diagram of example components of one or more devices of Fig. 2; and
Fig. 4 is a flow chart of an example process for providing a virtual reality scene based on a role associated with a viewer of the virtual reality scene.

### DETAILED DESCRIPTION

The following detailed description of example implementations refers to the accompanying drawings. The same reference numbers in different drawings may identify the same or similar elements.

Change management may refer to any approach to or process for transitioning individuals, teams, and organizations using methods intended to re-direct the use of resources, business processes, budget allocations, or other modes of operation that significantly reshape a company or organization. To facilitate change management, an entity may provide information regarding changes to the modes of operation, such as information regarding changing requirements, processes, or the like. Different users, people, workers, devices, or the like, may be affected by changes in different ways. As one example, in a clinical environment undergoing a transition to a paperless filing system, a patient may be differently affected than a nurse, and a nurse may be differently affected than a doctor. It may be helpful to employees of the clinical environment to experience predicted results of the changes with regard to different roles of the clinical environment (e.g., patient, nurse, doctor, etc.). Additionally, or alternatively, it may be useful to provide information regarding the changes to appropriate parties. For example, a nurse may be provided information regarding changes that affect the nurse, and so on. As described herein, a set of information regarding changes and/or predicted results of changes of a change management operation to be provided to a user is referred to as a "scene."

However, generating multiple, different scenes regarding different roles may be time consuming and resource intensive (e.g., memory resources, processor resources, organizational resources, etc.). Furthermore, providing the entirety of a scene to users that may be associated with different roles is resource intensive and could create security issues. For example, a user associated with a particular role may access confidential information, included in the scene, that should not be provided to users not associated with the particular role.

Implementations described herein permit a VR platform to provide portions of a scene that are customized based on roles associated with user devices to which the portions are to be provided. For example, the VR platform may identify a role associated with a user device, and may selectively provide a portion of the scene to the user device for display, via a VR scene, to a user. The portion of the scene that is provided to the user may be relevant to the role. For example, continuing the clinical environment example from above, when a user is associated with a role of "nurse," the portion of the scene may relate to inputting and accessing paperless patient files. Further, the portion of the scene may exclude, from the VR scene, other portions of the scene that are irrelevant to the role of nurse (e.g., accounting information, information regarding insurance compliance, etc.).

The roles associated with the users and/or user devices may be determined based on user input, based on locations of the user devices (e.g., based on global positioning systems of the user devices), based on credentials associated with the users, based on a determination by the VR platform, based on surroundings of the users (e.g., as the VR scene is provided via the user devices), or the like.

By selectively providing portions of the scene based on roles, the VR platform conserves computing resources that would otherwise be used to provide the entire scene, and automates the process of generating different scenes for different roles, which would otherwise be performed by a human in a subjective and time-consuming fashion. Furthermore, by conveying change management information using a VR scene, the VR platform may improve user engagement with and retention when the change management information is presented to the user. Still further, the VR platform may improve security of information associated with the scene by selectively providing information based on the roles.

In some implementations, use of the VR platform may reduce the cost of implementing change management by identifying shortcomings, issues, unintended consequences, etc., associated with a proposed change prior to actually implementing the change. Furthermore, VR may provide a useful and intuitive interface for provision of information regarding roles and change management processes. Change management, by its nature, involves shifting requirements, expectations, and tasks. By iteratively updating the VR scene so that the VR scene is in synch with the shifting requirements, expectations, and tasks, user retention of such information may be improved. Further, the VR platform (or an administrator device associated with the VR platform) may provide push notifications to relevant parties as the VR scene is modified, which may improve comprehension and retention of modifications to the change management process.

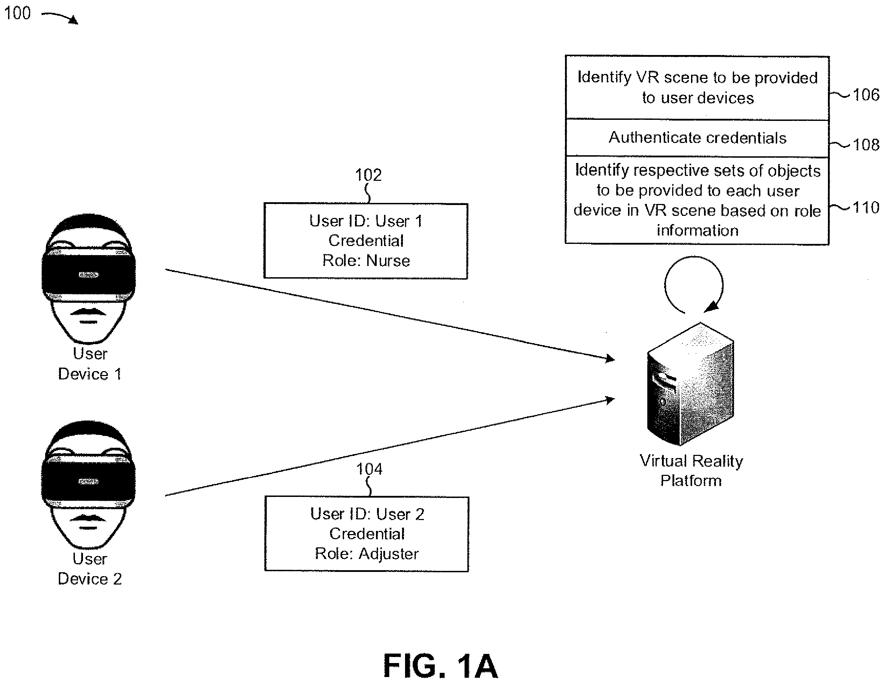

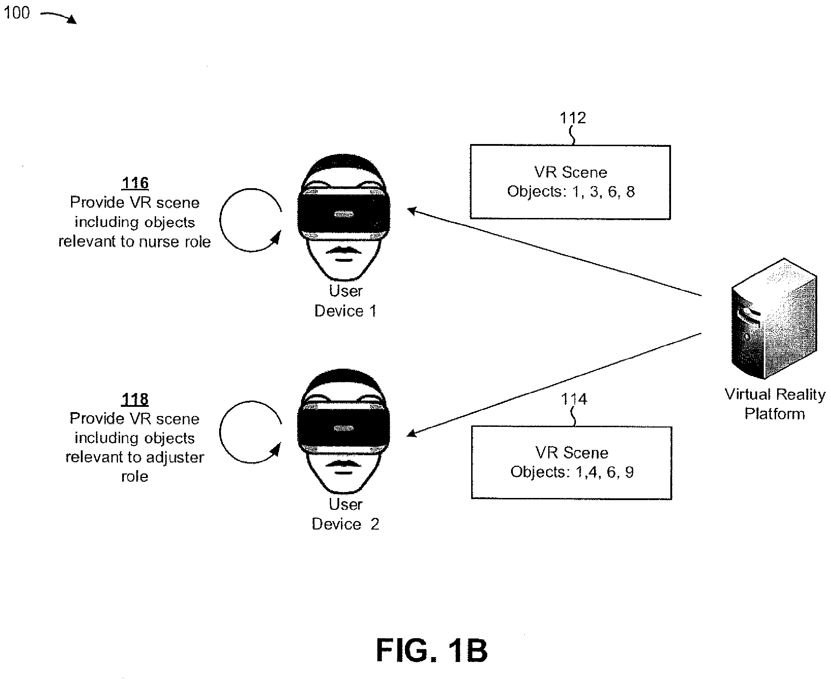

Figs. 1A and 1B are diagrams of an overview of an example implementation 100 described herein. Implementation 100 includes a user associated with a user device 1, a user associated with a user device 2, and a virtual reality (VR) platform.

As shown in Fig. 1A, user device 1 and user device 2 may provide respective user identifiers (ID), credentials (e.g., a password, a passphrase, a character string, or the like), and role information. For example, and as shown by reference number 102, the user device associated with user 1 may provide a user ID (user 1), a credential, and a role (nurse) to the VR platform. As shown by reference number 104, the user device associated with user 2 may provide a user ID (user 2), a credential, and a role (adjuster) to the VR platform. Based on the user ID, credential, and/or role information, the VR platform may determine role information identifying respective roles associated with each user device.

As used herein, a role refers to an attribute, string of characters, or value corresponding to a set of objects of a virtual reality scene. For example, in a particular environment or scenario, roles may be mapped to a variety of occupations or tasks relating to the particular environment or scenario, and a VR scene regarding the particular environment or scenario may include objects that are relevant to some roles and irrelevant to other roles based on responsibilities and actions associated with the occupations or tasks.

As shown by reference number 106, based on the role information provided by the user devices associated with user 1 and/or user 2, the VR platform may identify a VR scene to be provided to the user devices 1 and 2. The VR platform may identify the VR scene based on the user identifiers, identifies based on locations of the user devices, and may identify the VR scene based on the credentials, or the like. The VR scene may relate to an environment or scenario, and may include objects that allow the users of the user devices 1 and 2 to interact with the environment or scenario (e.g., after one or more change management actions are performed). As shown by reference number 108, the VR platform may authenticate the credentials provided by user devices 1 and 2. For example, the VR platform may determine whether user devices 1 and 2 have permission to access the VR scene associated with the respective roles, and may provide the VR scene based on determining that user devices 1 and 2 have permission to access the VR scene.

As shown by reference number 110, the VR platform identifies sets of objects (e.g., of a plurality of objects included in the VR scene), to be provided to each user device associated with user 1 and/or user 2, in the VR scene. For example, the VR platform may identify a first set of objects for user device 1 and a second set of objects for user device 2. An object may include information to be provided as part of the VR scene. For example, an object may include an animation, a two-dimensional (2D) object, a three-dimensional (3D) object, an interactive set of information, an audio recording, a guide, or any other information that may be provided as part of the VR scene. A VR scene object corresponds to a physical object in the surroundings of a user device (based on a physical identifier) as described in more detail elsewhere herein.

In some implementations, although user device 1 is associated with the nurse role, user 1 may or may not be a nurse. For example, user 1 may be an entity that wants to learn about a nurse's role. By tailoring the VR scene for the nurse role, the VR platform provides a resource-efficient and immersive way for the user to learn about the nurse's role. Furthermore, using VR as compared to traditional methods of education (e.g., instructional videos, checklists, written summaries, training classes, etc.) may improve retention of information regarding the role associated with the portion of the VR scene.

The VR scene includes a plurality of objects. User devices may be provided with different portions of the VR scene, where each portion includes different objects of the plurality of objects. For example, one or more of the objects provided to user device 1 may be different from objects that are provided to user device 2. By providing different sets of objects to different user devices, the VR platform enables customization of the VR scene for different roles without generating different VR scenes from scratch.

As shown in Fig. 1B, and by reference number 112, the VR platform may provide VR scene objects 1, 3, 6, and 8 to user device 1. As shown by reference number 114, the VR platform may provide VR scene objects 1, 4, 6, and 9 to user device 2. For example, objects 1 and 6 may be relevant to both of the roles (nurse and adjuster), objects 3 and 8 may be relevant to the nurse role and not the adjuster role, and objects 4 and 9 may be relevant to the adjuster role and not the nurse role.

As shown by reference number 116, user device 1 may provide, to user 1, the VR scene including objects relevant to the nurse role. As shown by reference number 118, user device 2 may provide, to user 2, the VR scene including objects relevant to an adjuster role. By selectively providing portions of the scene (e.g., scene objects) based on roles, the VR platform conserves computing resources that would otherwise be used to provide the entire scene. Furthermore, by providing the portions of the scene for generation of a virtual reality scene, the VR platform may improve user engagement with and retention of information presented to the user. Still further, the VR platform may improve security of information associated with the scene by selectively providing information based on the roles.

As indicated above, Figs. 1A and 1B are provided merely as an example. Other examples are possible and may differ from what was described with regard to Figs. 1A and 1B.

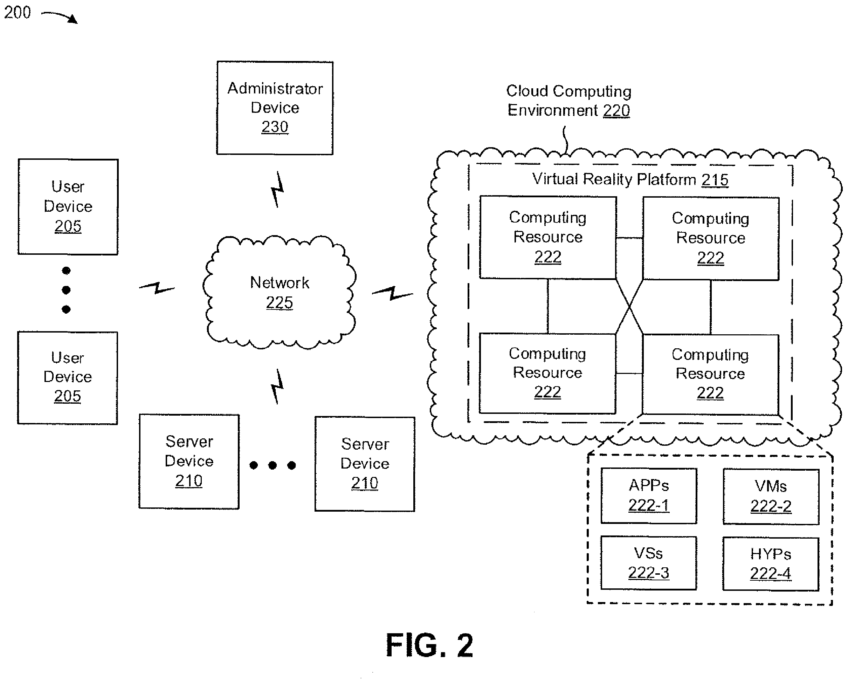

Fig. 2 is a diagram of an example environment 200 in which systems and/or methods described herein may be implemented. As shown in Fig. 2, environment 200 may include one or more user devices 205, one or more server devices 210, a VR platform 215 hosted within a cloud computing environment 220, and a network 225. Devices of environment 200 may interconnect via wired connections, wireless connections, or a combination of wired and wireless connections.

User device 205 includes one or more devices capable of receiving, generating, storing, processing, and/or providing information, such as a VR scene. User device 205 may include a communication and computing device and includes a mobile phone (e.g., a smart phone, a radiotelephone, etc.), a laptop computer, a tablet computer, a handheld computer, a virtual reality headset, a virtual reality device. User device 205 may generate and/or provide at least a portion of a VR scene that is generated and/or modified by VR platform 215.

Server device 210 includes one or more devices capable of receiving, collecting, obtaining, gathering, storing, processing, and/or providing information associated with a VR scene. For example, server device 210 may include a server or a group of servers.

VR platform 215 includes one or more devices capable of receiving, determining, processing, storing, and/or providing information associated with a VR scene. For example, VR platform 215 may include a server or a group of servers. In some implementations, VR platform 215 may receive, store, and/or provide information regarding a scene to be provided to one or more user devices 205.

In some implementations, VR platform 215 may be associated with a VR application. The VR application may be a computer program designed to perform a group of coordinated functions, tasks, or activities for the VR platform 215. For example, the VR application may integrate VR platform 215 with a graphical user interface (GUI) of VR platform 215. In some implementations, the VR application may be installed on user device 205.

In some implementations, VR platform 215 may be associated with a GUI. The GUI may allow a user to interact with user device 205 through graphical icons, visual indicators, typed command labels, text navigation, or the like. A user may interact with the GUI through direct manipulation of the graphical icons, visual indicators, typed command labels, text navigation, or the like. In some implementations, the GUI may provide role-based user access to learning and/or push notifications.

In some implementations, VR platform 215 may be associated with one or more operating systems (e.g., iOS, Android, or the like). In some implementations, VR platform 215 may be associated with application middleware. The application middleware may be a software layer that ties the one or more operating systems and the VR application. The application middleware also may connect software components in VR platform 215.

In some implementations, VR platform 215 may be associated with a server device 210 and/or a database. The server device 210 and/or database may store content updates provided by a VR platform 215 administrator. For example, the server device 210 and/or database may store content updates that are pushed into VR platform 215 by administrator device 230.

In some implementations, VR platform 215 may be associated with an application programming interface (API) that defines how routines and protocols may be used when the GUI is programmed. The API may call role-based information from the database and/or server device 210.

In some implementations, VR platform 215 may be associated with a content management platform and/or administrator device, where new content and notifications may be designed for change management and training.

In some implementations, as shown, VR platform 215 may be hosted in cloud computing environment 220. Notably, while implementations described herein describe VR platform 215 as being hosted in cloud computing environment 220, in some implementations, VR platform 215 may not be cloud-based or may be partially cloud-based.

Cloud computing environment 220 includes an environment that hosts VR platform 215. Cloud computing environment 220 may provide computation, software, data access, storage, etc. services that do not require end-user (e.g., user device 205) knowledge of a physical location and configuration of system(s) and/or device(s) that hosts VR platform 215. As shown, cloud computing environment 220 may include a group of computing resources 222 (referred to collectively as "computing resources 222" and individually as "computing resource 222").

Computing resource 222 includes one or more personal computers, workstation computers, server devices, or another type of computation and/or communication device. In some implementations, computing resource 222 may host VR platform 215. The cloud resources may include compute instances executing in computing resource 222, storage devices provided in computing resource 222, data transfer devices provided by computing resource 222, etc. In some implementations, computing resource 222 may communicate with other computing resources 222 via wired connections, wireless connections, or a combination of wired and wireless connections.

As further shown in Fig. 2, computing resource 222 may include a group of cloud resources, such as one or more applications ("APPs") 222-1, one or more virtual machines ("VMs") 222-2, virtualized storage ("VSs") 222-3, one or more hypervisors ("HYPs") 222-4, or the like.

Application 222-1 includes one or more software applications that may be provided to or accessed by user device 205. Application 222-1 may eliminate a need to install and execute the software applications on user device 205. For example, application 222-1 may include software associated with VR platform 215 and/or any other software capable of being provided via cloud computing environment 220. In some implementations, one application 222-1 may send/receive information to/from one or more other applications 222-1, via virtual machine 222-2.

Virtual machine 222-2 includes a software implementation of a machine (e.g., a computer) that executes programs like a physical machine. Virtual machine 222-2 may be either a system virtual machine or a process virtual machine, depending upon use and degree of correspondence to any real machine by virtual machine 222-2. A system virtual machine may provide a complete system platform that supports execution of a complete operating system ("OS"). A process virtual machine may execute a single program, and may support a single process. In some implementations, virtual machine 222-2 may execute on behalf of a user (e.g., user device 205), and may manage infrastructure of cloud computing environment 220, such as data management, synchronization, or long-duration data transfers.

Virtualized storage 222-3 includes one or more storage systems and/or one or more devices that use virtualization techniques within the storage systems or devices of computing resource 222. In some implementations, within the context of a storage system, types of virtualizations may include block virtualization and file virtualization. Block virtualization may refer to abstraction (or separation) of logical storage from physical storage so that the storage system may be accessed without regard to physical storage or heterogeneous structure. The separation may permit administrators of the storage system flexibility in how the administrators manage storage for end users. File virtualization may eliminate dependencies between data accessed at a file level and a location where files are physically stored. This may enable optimization of storage use, server consolidation, and/or performance of non-disruptive file migrations.

Hypervisor 222-4 provides hardware virtualization techniques that allow multiple operating systems (e.g., "guest operating systems") to execute concurrently on a host computer, such as computing resource 222. Hypervisor 222-4 may present a virtual operating platform to the guest operating systems, and may manage the execution of the guest operating systems. Multiple instances of a variety of operating systems may share virtualized hardware resources.

Network 225 includes one or more wired and/or wireless networks. For example, network 225 may include a cellular network (e.g., a long-term evolution (LTE) network, a 3G network, a code division multiple access (CDMA) network, etc.), a public land mobile network (PLMN), a local area network (LAN), a wide area network (WAN), a metropolitan area network (MAN), a telephone network (e.g., the Public Switched Telephone Network (PSTN)), a private network, an ad hoc network, an intranet, the Internet, a fiber optic-based network, or the like, and/or a combination of these or other types of networks.

Administrator device 230 includes one or more devices capable of receiving, generating, storing, processing, or providing information associated with a virtual reality scene. For example, administration device 230 may include a server device, a group of server devices, one or more of the devices associated with user device 205, and/or the like. In some implementations, administration device 230 may manage push notifications for user device 205 based on updates or changes to a virtual reality scene or a role associated with user device 205. For example, administration device 230 may manage information regarding user devices 205 associated with particular roles, changes to the particular roles, and/or modifications to the VR scene based on the changes to the particular role. Administration device 230 may provide a push notification to user device 205 regarding VR scenes to be viewed by a user of user device 205. In some implementations, administration device 230 may be included in or may be a part of VR platform 215.

The number and arrangement of devices and networks shown in Fig. 2 are provided as an example. In practice, there may be additional devices, fewer devices, different devices, or differently arranged devices than those shown in Fig. 2. Furthermore, two or more devices shown in Fig. 2 may be implemented within a single device, or a single device shown in Fig. 2 may be implemented as multiple, distributed devices. Additionally, one or more of the devices of environment 200 may perform one or more functions described as being performed by another one or more devices of environment 200.

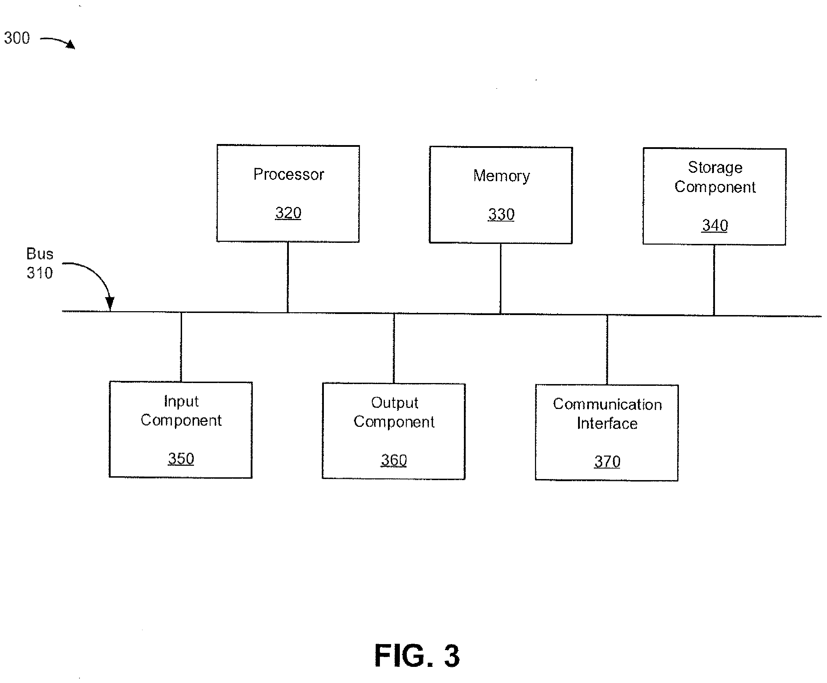

Fig. 3 is a diagram of example components of a device 300. Device 300 may correspond to user device 205, server device 210, computing resource 222, and/or administration device 230. In some implementations, user device 205, server device 210, and/or computing resource 222 may include one or more devices 300 and/or one or more components of device 300. As shown in Fig. 3, device 300 may include a bus 310, a processor 320, a memory 330, a storage component 340, an input component 350, an output component 360, and a communication interface 370.

Bus 310 includes a component that permits communication among the components of device 300. Processor 320 is implemented in hardware, firmware, or a combination of hardware and software. Processor 320 takes the form of a central processing unit (CPU), a graphics processing unit (GPU), an accelerated processing unit (APU), a microprocessor, a microcontroller, a digital signal processor (DSP), a field-programmable gate array (FPGA), an application-specific integrated circuit (ASIC), or another type of processing component. In some implementations, processor 320 includes one or more processors capable of being programmed to perform a function. Memory 330 includes a random access memory (RAM), a read only memory (ROM), and/or another type of dynamic or static storage device (e.g., a flash memory, a magnetic memory, and/or an optical memory) that stores information and/or instructions for use by processor 320.

Storage component 340 stores information and/or software related to the operation and use of device 300. For example, storage component 340 may include a hard disk (e.g., a magnetic disk, an optical disk, a magneto-optic disk, and/or a solid state disk), a compact disc (CD), a digital versatile disc (DVD), a floppy disk, a cartridge, a magnetic tape, and/or another type of non-transitory computer-readable medium, along with a corresponding drive.

Input component 350 includes a component that permits device 300 to receive information, such as via user input (e.g., a touch screen display, a keyboard, a keypad, a mouse, a button, a switch, and/or a microphone). Additionally, or alternatively, input component 350 may include a sensor for sensing information (e.g., a global positioning system (GPS) component, an accelerometer, a gyroscope, and/or an actuator). Output component 360 includes a component that provides output information from device 300 (e.g., a display, a speaker, and/or one or more light-emitting diodes (LEDs)).

Communication interface 370 includes a transceiver-like component (e.g., a transceiver and/or a separate receiver and transmitter) that enables device 300 to communicate with other devices, such as via a wired connection, a wireless connection, or a combination of wired and wireless connections. Communication interface 370 may permit device 300 to receive information from another device and/or provide information to another device. For example, communication interface 370 may include an Ethernet interface, an optical interface, a coaxial interface, an infrared interface, a radio frequency (RF) interface, a universal serial bus (USB) interface, a Wi-Fi interface, a cellular network interface, or the like.

Device 300 may perform one or more processes described herein. Device 300 may perform these processes in response to processor 320 executing software instructions stored by a non-transitory computer-readable medium, such as memory 330 and/or storage component 340. A computer-readable medium is defined herein as a non-transitory memory device. A memory device includes memory space within a single physical storage device or memory space spread across multiple physical storage devices.

Software instructions may be read into memory 330 and/or storage component 340 from another computer-readable medium or from another device via communication interface 370. When executed, software instructions stored in memory 330 and/or storage component 340 may cause processor 320 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

The number and arrangement of components shown in Fig. 3 are provided as an example. In practice, device 300 may include additional components, fewer components, different components, or differently arranged components than those shown in Fig. 3. Additionally, or alternatively, a set of components (e.g., one or more components) of device 300 may perform one or more functions described as being performed by another set of components of device 300.

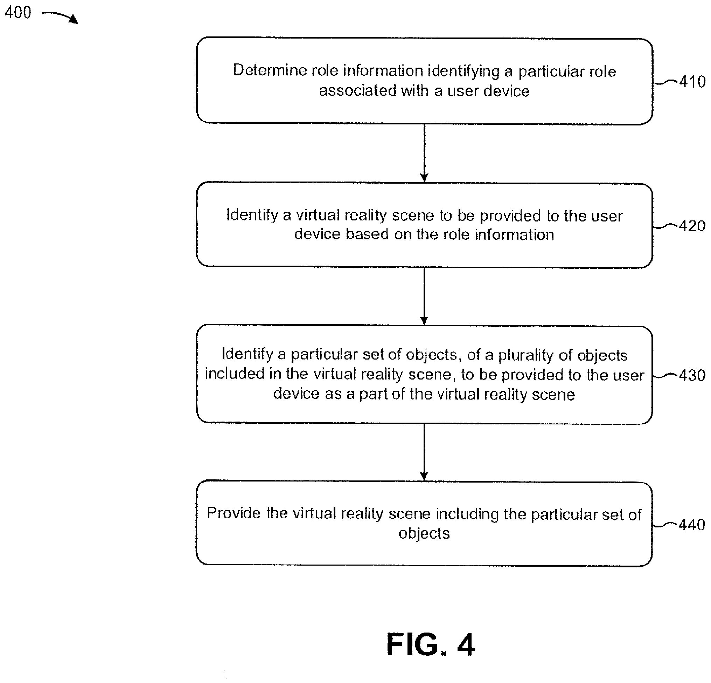

Fig. 4 is a flow chart of an example process 400 for providing a virtual reality scene based on a role associated with a viewer of the virtual reality scene. One or more process blocks of Fig. 4 are performed by VR platform 215.

As shown in Fig. 4, process 400 may include determining role information identifying a particular role associated with a user device (block 410). VR platform 215 receives or determines role information identifying a particular role associated with one or more user devices 205. In some implementations, the role information identifies a role associated with user device 205. A role may correspond to a set of objects of a VR scene. VR platform 215 provides the VR scene, including the set of objects, based on user device 205 being associated with the role, as described in more detail below.

In some implementations, VR platform 215 may receive the role information from user device 205. For example, a user of user device 205 may specify role information so that the user can view a VR scene regarding a particular role. In this way, VR platform 215 conserves processor resources that would be used to determine the particular role without the user input.

In some implementations, VR platform 215 may automatically determine role information based on user device 205. For example, VR platform 215 may store information identifying roles for particular user devices 205, particular types of user devices 205, user devices 205 located at a particular place, or the like. In some implementations, VR platform 215 may identify a type or identity of user device 205 and select the role for user device 205 based on the stored information.

In some implementations, VR platform 215 may automatically determine role information for a particular user device 205. For example, the particular user device 205 may be associated with a particular device identifier (e.g., a phone number, a network address, account information, etc.), and VR platform 215 may determine role information based on roles associated with device identifiers. In some implementations, VR platform 215 may store information identifying roles to be assigned for device identifiers (e.g., based on particular mappings of roles and device identifiers, based on characteristics of the device identifiers, such as domain names of an email address, etc.), and may determine the role information based on the stored information.

In some implementations, VR platform 215 may automatically determine role information for a particular type of user device 205. For example, assume that a first type of user device 205 is associated with users of a type that are to view VR scenes for a first set of roles, and that a second type of user device 205 is associated with users of a type that are to view VR scenes for a second set of roles. In that case, VR platform 215 may determine role information for a user device 205 of the first type indicating that the user device 205 of the first type is associated with the first set of roles, and may determine role information for a user device 205 of the second type indicating that the user device 205 of the second type is associated with the second set of roles (e.g., based on information mapping the type of user devices 205 to the respective sets of roles). In this way, VR platform 215 may conserve processor, human, and organizational resources that would otherwise be used to specify role information for individual user devices 205 of particular types.

VR platform 215 automatically determines role information for a user device 205 located at a particular place. VR platform 215 identifies a location of user device 205, and identifies roles that are to be provided to user devices 205 at the location. VR platform 215 may identify the location based on global positioning information provided by user device 205, based on an image or video of surroundings of user device 205, based on user input, and/or the like. In this way, VR platform 215 identifies VR scenes associated with particular roles to be provided to users in a particular place.

The role information identifies a particular role. For example, a role may be associated with a job, a worker, a fictional character, or the like. As an example, in a medical office, a role may include a nurse, a nurse practitioner, an insurance processor, an x-ray tech, a doctor, a patient, a receptionist, or the like. In some implementations, VR platform 215 may modify the VR scene based on the particular role and/or may selectively include particular content in the VR scene, such that objects relating to the particular role are provided in the VR scene and objects unrelated to the particular role are excluded from the VR scene.

As shown in Fig. 4, process 400 includes identifying a virtual reality scene to be provided to the user device based on the role information (block 420). VR platform 215 identifies a VR scene to be provided to user device 205 based on the role information. In some implementations, the VR scene includes a plurality of objects, of which different sets of objects are provided to user devices 205 associated with different roles.

In some implementations, VR platform 215 may identify the VR scene to be provided based on the role information, based on an identity of user device 205 and/or the user, and/or based on other information. For example, VR platform 215 may determine that user device 205 or a user of user device 205 is associated with a particular organization, and may provide a VR scene associated with the particular organization. In other words, VR platform 215 may be associated with multiple organizations and may provide, to user device 205, a VR scene associated with a first organization and not associated with a second organization when the user of user device 205 is associated with the first organization.

VR platform 215 determines that user device 205 is located at a particular place (e.g., a place of business associated with an organization, a training center, or the like), and provides a VR scene associated with the particular place. In other words, VR platform 215 may store VR scenes associated with multiple places. VR platform 215 identifies the location of user device 205 e.g. by receiving location information from user device 205, querying another device regarding the location of user device 205, or the like. VR platform 215 identifies a VR scene associated with the location of user device 205 and provides this VR scene to user device 205. In this way, VR platform 215 may improve operation of the virtual reality experience and efficiently use computing resources of VR platform 215 by providing a VR scene that is associated with the current surroundings of user device 205.

In some implementations, VR platform 215 may identify the VR scene to be provided based on an instruction from an administrator. For example, an administrator (or a device associated with an administrator) may generate a VR scene, and may provide the VR scene to VR platform 215 for provision to user devices 205. The VR scene may be associated with information identifying which objects, of the VR scene, are to be provided to user devices 205 with particular roles. VR platform 215 may determine role information for user devices 205 to receive the VR scene. For example, VR platform 215 may request the role information, may refer to stored role information that was previously provided by the user devices 205 or another device, and/or the like.

As shown in Fig. 4, process 400 includes identifying a particular set of obj ects, of a plurality of objects included in the virtual reality scene, to be provided to the user device as a part of the virtual reality scene (block 430). VR platform 215 identifies a particular set of objects, of a plurality of objects included in the virtual reality scene, to be provided to the user device as a part of the virtual reality scene. The VR scene is associated with a plurality of objects, and different sets of objects are associated with different roles. For example, VR platform 215 may store information identifying one or more roles associated with each object of the VR scene.

In some implementations, there may be some overlap between the sets of objects corresponding to the different roles, as described in connection with Fig. 1B, above. For example, certain objects may be included in a VR scene tailored for two or more different roles. By providing the certain objects in connection with each role, rather than generating two different VR scenes, computational and organizational resources of VR platform 215 are saved that would otherwise be used to generate two different VR scenes. For example, VR platform 215 may store information identifying the VR scene, including the plurality of objects, and may selectively add objects to or remove objects from the VR scene based on the role associated with user device 205.

VR platform 215 provides the VR scene, including the objects, to user device 205. For example, VR platform 215 may provide a data stream of the VR scene to user device 205 (e.g., as user device 205 provides the VR scene to the user). In this way, VR platform 215 conserves storage resources of user device 205. Additionally, or alternatively, VR platform 215 may provide the VR scene to user device 205 before user device 205 provides the VR scene to the user. For example, VR platform 215 may provide information identifying the VR scene and the plurality of objects, and user device 205 may store the information identifying the VR scene and the plurality of objects. In some implementations, user device 205 may subsequently provide the VR scene, including particular objects corresponding to a particular role. For example, user device 205 may provide the VR scene including the particular objects based on receiving information from VR platform 215 identifying the particular objects to be provided, or based on receiving information identifying the role and identifying the particular objects to be provided based on the role. In this way, VR platform 215 conserves network resources that would otherwise be used to provide the VR scene to user device 205 on the fly.

As shown in Fig. 4, process 400 includes providing the virtual reality scene including the particular set of objects (block 440). For example, VR platform 215 may provide the VR scene including the particular set of objects corresponding to the role associated with user device 205. In some implementations, VR platform 215 may stream the VR scene to user device 205. Additionally, or alternatively, VR platform 215 may provide the VR scene and the plurality of objects to user device 205 before user device 205 provides the VR scene to the user. For example, VR platform 215 may receive information from user device 205 identifying a role. VR platform 215 may identify objects to be included in the VR scene based on the role. VR platform 215 may provide information identifying the objects to be included to user device 205, and user device 205 may provide the scene including the objects. Additionally, or alternatively, user device 205 may filter objects, other than the objects to be included, from the VR scene. In this way, user device 205 reduces bandwidth usage and conserves processor resources of VR platform 215.

User device 205 identifies physical objects in a vicinity of user device 205 to identify or provide as part of a VR scene for a particular role. The physical objects are associated with respective physical identifiers (e.g., RFID tags, may be detected using acoustic, optical, radiofrequency transponders, etc.) that indicate that the physical objects are associated with a particular role. When user device 205 provides the VR scene for the particular role, the physical object may be highlighted, may be associated with information provided via the virtual reality environment, or the like. For example, when people associated with different roles are to access files on a particular machine in an office, the particular machine may be tagged with a physical identifier, and may therefore be provided (e.g., highlighted, etc.) in the VR scene as tailored for the different roles. Additionally, or alternatively, VR platform 215 may determine that the physical object is included in the VR scene, and may identify particular information to provide as part of the VR scene (e.g., information indicating how to use the physical object, a warning regarding the physical object, etc.). In this way, VR platform 215 adjusts a VR scene based on information that is relevant to physical objects in a vicinity of user device 205, which conserves computational resources that would otherwise be used to provide information regarding irrelevant objects or irrelevant portions of the scene. As used herein, a vicinity may refer to any location relevant to the VR scene that a user may experience. For example, in some cases, a vicinity may be a few feet (e.g., an office), and in other cases the vicinity may be measured in inches (e.g., for a surgical procedure) or yards (for a large room or warehouse).

In some implementations, VR platform 215 may modify a VR scene based on surroundings of user device 205. For example, user device 205 may monitor locations or surroundings of user device 205 at which user device 205 is located during a period of time (e.g., a number of days, weeks, hours, etc.). VR platform 215 (or user device 205) may configure the VR scene and/or the particular set of objects to be provided in the VR scene based on the locations or surroundings. VR platform 215 provides the particular set of objects corresponding to objects included in the surroundings of the user device 205. Additionally, or alternatively, VR platform 215 may configure the VR scene to be provided by a first user device 205 based on monitoring locations or surroundings of a second user device 205, which conserves processor and organizational resources that would otherwise be used to independently configure the VR scene for the first user device 205.

In some implementations, VR platform 215 may modify a VR scene based on environmental information. For example, assume that a first set of objects (e.g., portion of a scene) is to be provided to user device 205 associated with a first role, and assume that a second set of objects is to be provided to user device 205 associated with a second role. For example, the first role may be associated with the first set of objects, and the second role may be associated with the second set of objects, based on a planned change management approach. Now assume that VR platform 215 receives environmental information that identifies a change in the planned change management approach (e.g., a reorganization, change in plans, change in procedures, divestiture, natural disaster, departure of key staff, etc.).

In such a case, VR platform 215 may identify modifications to the scene based on the environmental information. For example, VR platform 215 may add one or more objects to the first set and/or the second set or remove one or more objects from the first set and/or the second set. As another example, VR platform 215 may provide the first set of objects to user devices 205 associated with the second role, and/or may provide the second set of objects to user devices 205 associated with the first role. As yet another example, VR platform 215 may permit user devices 205 associated with roles other than the first role or the second role to view the first set of objects and/or the second set of objects. Additionally, or alternatively, VR platform 215 may receive or determine information identifying one or more modified objects associated with a particular role, and may provide the one or more modified objects to user device 205 for inclusion in the VR scene. In this way, VR platform 215 adapts a VR scene based on environmental information, which improves relevance of the virtual reality environment and conserves computational resources that would otherwise be used to provide irrelevant information in the VR scene, or to generate an entirely new set of VR scenes for provision to user devices 205 associated with the various roles.

In some implementations, VR platform 215 may provide a push notification to user device 205 to cause user device 205 to provide a portion of a scene. For example, the push notification may include the portion of the scene. As another example, the push notification may request input of a credential and/or selection of a role. Based on the input, VR platform 215 may provide the portion of the scene. As yet another example, VR platform 215 (or administration device 230) may provide a push notification based on receiving an update to a scene, a role, and/or change management process. For example, when VR platform 215 (or administration device 230) determines that permissions for a particular role have been changed, VR platform 215 (or administration device 230) may provide a push notification to user device 205 associated with the particular role.

Additionally, or alternatively, VR platform 215 or administration device 230 may determine that objects to be provided in association with a particular role have been changed, and may provide a push notification to user devices 205 associated with the particular role to cause the user devices 205 to provide the VR scene with the changed objects. Additionally, or alternatively, VR platform 215 may provide push notifications based on particular roles. For example, VR platform 215 may provide push notifications to only user devices 205 associated with impacted roles or to all user devices 205 associated with VR platform 215 (e.g., based on a preference indicated by an administrator). Additionally, or alternatively, VR platform 215 may assign a role to a user based on a push notification. For example, VR platform 215 may provide a notification to user device 205 identifying a role to be performed by the user.

By providing push notifications regarding a change management process, VR platform 215 increases a likelihood that users view relevant scenes. Further, by targeting the push notifications to appropriate parties, VR platform 215 conserves computational resources that would otherwise be used to provide this information in an untargeted or broadcast manner. Still further, providing push notifications regarding changes in the change management process may improve effectiveness of the change management process, and VR may provide a useful and intuitive interface for information regarding the change management process.

As an example process for user device 205, user device 205 may install an application for viewing virtual reality scenes, and may launch the application. In such a case, user device 205 may receive or determine information that identifies a role, based on which to access portions of the scenes. For example, a user may input information that identifies the role. As another example, user device 205 may determine the role (e.g., based on a location of the user device, based on a credential inputted by the user, based on a device type of the device, based on a configuration of the device, based on an identifier of the device, based on information associated with the application, etc.).

Continuing the above example process, user device 205 may enter a virtual reality viewing mode. For example, user device 205 may be inserted into, or may be connected to, a virtual reality headset. As another example, a virtual reality viewing mode of user device 205 may be activated. In some implementations, user device 205 may provide an introductory scene for the user (e.g., when the user is a first-time user). The introductory scene may include instructions for interacting with the virtual reality environment, or the like. User device 205 may provide information that identifies the role to VR platform 215.

Based on the information that identifies the role, VR platform 215 may provide a portion of a scene to user device 205. The portion of the scene may include a subset of objects included in the scene, and the subset of objects may be selected based on the role. For example, a user associated with a leadership role may receive executive summary and performance dashboards, whereas an end user (e.g., an employee or consumer) may receive information pertinent to job assistance, training, etc. User device 205 may provide the portion of the scene, as a virtual reality scene, to the user. The user may interact with the portion of the scene. When the scene relates to a change management process, the portion of the scene may relate to a change in an environment, an operation, and/or a process for an entity with the role identified for user device 205.

In some implementations, VR platform 215 may be associated with an information on demand (IoD) implementation. For example, the IoD implementation may provide an information interface between users of user device 205 and an administrator or leader. As a more particular example, assume that a user needs to access a particular interface or dashboard that only an administrator or leader has permission to access. In such a case, the IoD implementation may provide a notification to the administrator or leader for the administrator or leader to approve access to the particular interface or dashboard. In some implementations, once approved, the dashboard (or other relevant information) may be made available to the user (e.g., for a limited period of time).

In some implementations, VR platform 215 may be associated with a crowd-based implementation for groups of users. For example, VR platform 215 may host a chat room or virtual lobby wherein users from different locations can view VR scenes, comment on VR scenes, interact with each other, exchange ideas or thoughts regarding VR scenes, and/or the like.

Although Fig. 4 shows example blocks of process 400, in some implementations, process 400 may include additional blocks, fewer blocks, different blocks, or differently arranged blocks than those depicted in Fig. 4. Additionally, or alternatively, two or more of the blocks of process 400 may be performed in parallel.

By selectively providing portions of a scene based on roles, VR platform 215 conserves computing resources that would otherwise be used to provide the entire scene, and automates the process of generating different scenes for different roles, which would otherwise be performed by a human in a subjective and time-consuming fashion. Furthermore, by using the VR scene to convey change management information, VR platform 215 may improve user engagement with and retention of information presented to the user. Still further, VR platform 215 may improve security of information associated with the scene by selectively providing information based on the roles.

The foregoing disclosure provides illustration and description, but is not intended to be exhaustive or to limit the implementations to the precise form disclosed. Modifications and variations are possible in light of the above disclosure or may be acquired from practice of the implementations.

As used herein, the term component is intended to be broadly construed as hardware, firmware, and/or a combination of hardware and software.

Certain user interfaces have been described herein and/or shown in the figures. A user interface may include a graphical user interface, a non-graphical user interface, a text-based user interface, etc. A user interface may provide information for display. In some implementations, a user may interact with the information, such as by providing input via an input component of a device that provides the user interface for display. In some implementations, a user interface may be configurable by a device and/or a user (e.g., a user may change the size of the user interface, information provided via the user interface, a position of information provided via the user interface, etc.). Additionally, or alternatively, a user interface may be pre-configured to a standard configuration, a specific configuration based on a type of device on which the user interface is displayed, and/or a set of configurations based on capabilities and/or specifications associated with a device on which the user interface is displayed.

It will be apparent that systems and/or methods, described herein, may be implemented in different forms of hardware, firmware, or a combination of hardware and software. The actual specialized control hardware or software code used to implement these systems and/or methods is not limiting of the implementations. Thus, the operation and behavior of the systems and/or methods were described herein without reference to specific software code-it being understood that software and hardware can be designed to implement the systems and/or methods based on the description herein.

Even though particular combinations of features are disclosed in the specification, these combinations are not intended to limit the disclosure of possible implementations.

Also, as used herein, the articles "a" and "an" are intended to include one or more items, and may be used interchangeably with "one or more." Furthermore, as used herein, the term "set" is intended to include one or more items (e.g., related items, unrelated items, a combination of related and unrelated items, etc.), and may be used interchangeably with "one or more." Where only one item is intended, the term "one" or similar language is used. Also, as used herein, the terms "has," "have," "having," or the like are intended to be open-ended terms. Further, the phrase "based on" is intended to mean "based, at least in part, on" unless explicitly stated otherwise.

## Claims

1. A method (400) for generating virtual reality scenes by generating different scenes for different roles, the method comprising:
receiving (410), by one or more devices of a virtual reality (VR) platform (215), role information identifying a particular role associated with a user device (205), the user device being one of a mobile phone, a laptop computer, a tablet computer, a handheld computer, a virtual reality headset, and a virtual reality device;
identifying, by the one or more devices of the VR platform (215), a location of the user device (205);
identifying (420), by the one or more devices of the VR platform (215), a virtual reality scene, of the virtual reality scenes, to be provided to the user device (205) based on the role information, wherein the VR platform (215) identifies the virtual reality scene associated with the particular role to be provided in the location, the virtual reality scene being associated with a current surroundings of the user device (205);
the virtual reality scenes including a plurality of objects,
wherein different sets of objects, of the plurality of objects, are associated with the different roles, the different sets of objects being associated with information identifying respective roles associated with the different sets of objects,
a role, of the respective roles, being associated with a corresponding set of objects based on the corresponding set of objects being relevant to a person performing the role;
identifying (430), by the one or more devices of the VR platform (215), a particular set of objects, of the different sets of objects, to be provided to the user device (205) as a part of the virtual reality scene, the particular set of objects being associated with the particular role,
wherein the user device (205) identifies physical objects in a vicinity of the user device (205) to provide as the part of the virtual reality scene for the particular role, the physical objects being associated with respective physical identifiers indicating that the physical objects are associated with the particular role; and
providing, by the one or more devices of the VR platform (215) and to the user device (205), the virtual reality scene including the particular set of objects, the particular set of objects corresponding to the objects included in the surroundings of the user device.

2. The method of claim 1, where providing the virtual reality scene comprises:
providing the virtual reality scene including the plurality of objects to permit the user device (205) to filter objects other than the particular set of objects from the virtual reality scene.

3. The method of claim 1 or 2, where an object, of the plurality of objects, is associated with two or more different roles.

4. The method of any one of the preceding claims, where providing the virtual reality scene including the particular set of objects comprises:
providing information identifying a physical identifier, of the physical identifiers, associated with a particular object of the particular set of objects,
the physical identifier to correspond to a physical object in the vicinity of the user device (205), and
the user device (205) to provide the particular object in the virtual reality scene based on detecting the physical identifier.

5. The method of any one of the preceding claims, further comprising:
receiving a modification to the virtual reality scene;
determining that the modification relates to a particular object of the particular set of objects; and
providing the particular object to the user device (205) for inclusion in the virtual reality scene based on the modification.

6. The method of any one of the preceding claims, where the particular object relates to a plurality of roles including the particular role; and
where the method further comprises:
identifying a plurality of user devices (205) associated with one or more roles of the plurality of roles; and
providing the particular object to the plurality of user devices for inclusion in the virtual reality scene based on the plurality of user devices (205) being associated with the one or more roles and based on the modification.

7. A computer program product comprising machine executable instructions residing on non-transitory computer readable media, which, when loaded and executed by a processor, cause the processor to perform operations according to the method of any one of claims 1-6.

8. A device for generating virtual reality scenes by generating different scenes for different roles, comprising:
one or more processors to:
determine role information identifying a particular role associated with a user device (205), the user device being one of a mobile phone, a laptop computer, a tablet computer, a handheld computer, a virtual reality headset, and a virtual reality device, where the one or more processors, when determining the role information, are to:
determine the role information based on a location of the user device (205);
identify a virtual reality scene, of the virtual reality scenes, to be provided to the user device (205) based on the role information and/or the user device (205), wherein the VR platform (215) identifies the virtual reality scene associated with the particular role to be provided in the location, the virtual reality scene being associated with a current surroundings of the user device (205);
the virtual reality scene including a plurality of objects,
wherein different sets of objects, of the plurality of objects, are associated with different roles, the different sets of objects being associated with information identifying respective roles associated with the different sets of objects;
identify a particular set of objects, of the different sets of objects, to be provided to the user device (205) as a part of the virtual reality scene based on the particular role,
wherein the user device (205) identifies physical objects in a vicinity of the user device (205) to provide as the part of the virtual reality scene for the particular role, the physical objects being associated with respective physical identifiers indicating that the physical objects are associated with the particular role; and
provide, to the user device (205), the virtual reality scene including the particular set of objects, the particular set of objects corresponding to the objects included in the surroundings of the user device.

9. The device of claim 8, where the one or more processors are further to:
provide a notification to the user device (205) indicating that the user device (205) is to receive the virtual reality scene including the particular set of objects.

10. The device of claim 8 or 9, where the particular set of objects is relevant to the particular role.

11. The device of any one of claims 8 to 10, where the one or more processors, when providing the virtual reality scene including the particular set of objects, are to:
provide the virtual reality scene including the plurality of objects to permit the user device (205) to filter objects other than the particular set of objects from the virtual reality scene.

12. The device of any one of claims 8 to 11, further comprising:
receiving information identifying one or more modified objects associated with the particular role; and
provide the one or more modified objects to the user device (205) for inclusion in the virtual reality scene.

13. The device of any one of claims 8 to 12, where the one or more processors, when determining the role information, are to:
receive the role information from the user device (205).

14. The device of any one of claims 8 to 13, where the one or more processors, when determining the role information, are to:
determine the role information based on information indicating that a user of the user device (205) is to view the virtual reality scene according to a set of roles that includes the particular role.

## Patentansprüche

1. Verfahren (400) zum Erzeugen von Virtual-Reality-Szenen durch Erzeugen verschiedener Szenen für verschiedene Rollen, wobei das Verfahren umfasst:
Empfangen (410), durch eine oder mehrere Vorrichtungen einer Virtual-Reality-(VR-)Plattform (215), von Rolleninformationen, die eine bestimmte Rolle identifizieren, die einer Benutzervorrichtung (205) zugeordnet ist, wobei die Benutzervorrichtung ein Mobiltelefon oder ein Laptop oder ein Tablet oder ein Handheld-Computer oder ein Virtual-Reality-Headset oder eine Virtual-Reality-Vorrichtung ist;
Identifizieren, durch die eine oder mehrere Vorrichtungen der VR-Plattform (215), eines Standorts der Benutzervorrichtung (205);
Identifizieren (420), durch die eine oder mehrere Vorrichtungen der VR-Plattform (215), einer Virtual-Reality-Szene der Virtual-Reality-Szenen, die der Benutzervorrichtung (205) anhand der Rolleninformationen bereitgestellt werden, wobei die VR-Plattform (215) die Virtual-Reality-Szene identifiziert, die der bestimmten Rolle zugeordnet ist, die an dem Standort bereitgestellt werden, wobei die Virtual-Reality-Szene einer aktuellen Umgebung der Benutzervorrichtung (205) zugeordnet ist;
wobei die Virtual-Reality-Szenen eine Vielzahl von Objekten beinhalten,
wobei verschiedene Objektgruppen aus der Vielzahl von Objekten den verschiedenen Rollen zugeordnet sind, wobei die verschiedenen Objektgruppen Informationen zugeordnet sind, welche die jeweiligen Rollen identifizieren, die den verschiedenen Objektgruppen zugeordnet sind,
wobei eine Rolle der jeweiligen Rollen einer entsprechenden Objektgruppe anhand der entsprechenden Objektgruppe zugeordnet wird, die für eine Person, welche die Rolle ausführt, relevant ist;
Identifizieren (430), durch die eine oder mehrere Vorrichtungen der VR-Plattform (215), einer bestimmten Objektgruppe der verschiedenen Objektgruppen, die der Benutzervorrichtung (205) als ein Teil der Virtual-Reality-Szene bereitgestellt werden, wobei die bestimmte Objektgruppe der bestimmten Rolle zugeordnet ist,
wobei die Benutzervorrichtung (205) physische Objekte in einer Nähe der Benutzervorrichtung (205) identifiziert, um sie als Teil der Virtual-Reality-Szene für die bestimmte Rolle bereitzustellen, wobei die physischen Objekte jeweiligen physischen Identifikatoren zugeordnet sind, die anzeigen, dass die physischen Objekte der bestimmten Rolle zugeordnet sind; und
Bereitstellen, durch die eine oder mehrere Vorrichtungen der VR-Plattform (215) und die Benutzervorrichtung (205), der Virtual-Reality-Szene, welche die bestimmte Objektgruppe beinhaltet, wobei die bestimmte Objektgruppe den Objekten entspricht, die in der Umgebung der Benutzervorrichtung beinhaltet sind.

2. Verfahren nach Anspruch 1, wobei das Bereitstellen der Virtual-Reality-Szene umfasst:
Bereitstellen der Virtual-Reality-Szene, welche die Vielzahl von Objekten beinhaltet, um der Benutzervorrichtung (205) zu ermöglichen, andere Objekte als die bestimmte Objektgruppe aus der Virtual-Reality-Szene zu filtern.

3. Verfahren nach Anspruch 1 oder 2, wobei einem Objekt der Vielzahl von Objekten zwei oder mehr verschiedene Rollen zugeordnet sind.

4. Verfahren nach einem der vorstehenden Ansprüche, wobei das Bereitstellen der Virtual-Reality-Szene, welche die bestimmte Objektgruppe beinhaltet, umfasst:
Bereitstellen von Informationen, die einen physischen Identifikator der physischen Identifikatoren identifizieren, der einem bestimmten Objekt der bestimmten Objektgruppe zugeordnet ist,
wobei der physische Identifikator einem physischen Objekt in der Nähe der Benutzervorrichtung (205) entspricht, und
wobei die Benutzervorrichtung (205) das bestimmte Objekt in der Virtual-Reality-Szene anhand des Erkennens des physischen Identifikators bereitstellt.

5. Verfahren nach einem der vorstehenden Ansprüche, ferner umfassend:
Empfangen einer Änderung der Virtual-Reality-Szene;
Bestimmen, dass sich die Änderung auf ein bestimmtes Objekt der bestimmten Objektgruppe bezieht; und
Bereitstellen des bestimmten Objekts an die Benutzervorrichtung (205) zur Aufnahme in die Virtual-Reality-Szene anhand der Änderung.

6. Verfahren nach einem der vorstehenden Ansprüche, wobei sich das bestimmte Objekt auf eine Vielzahl von Rollen bezieht, welche die bestimmte Rolle beinhalten; und wobei das Verfahren ferner umfasst:
Identifizieren einer Vielzahl von Benutzervorrichtungen (205), die einer oder mehreren Rollen der Vielzahl von Rollen zugeordnet sind; und
Bereitstellen des bestimmten Objekts an die Vielzahl von Benutzervorrichtungen zur Aufnahme in die Virtual-Reality-Szene anhand der Vielzahl von Benutzervorrichtungen (205), die der einen oder mehreren Rollen zugeordnet sind und auf der Änderung basieren.

7. Computerprogrammprodukt, aufweisend maschinenausführbare Befehle, die sich auf nicht-flüchtigen computerlesbaren Medien befinden und die, wenn sie von einem Prozessor geladen und ausgeführt werden, den Prozessor veranlassen, Vorgänge gemäß dem Verfahren nach einem der Ansprüche 1 bis 6 durchzuführen.

8. Vorrichtung zum Erzeugen von Virtual-Reality-Szenen durch Erzeugen verschiedener Szenen für verschiedene Rollen, umfassend:
einen oder mehrere Prozessoren zum:
Bestimmen von Rolleninformationen, die eine bestimmte Rolle identifizieren, die einer Benutzervorrichtung (205) zugeordnet ist, wobei die Benutzervorrichtung ein Mobiltelefon oder ein Laptop oder ein Tablet oder ein Handheld-Computer oder ein Virtual-Reality-Headset oder eine Virtual-Reality-Vorrichtung ist, wobei der eine oder mehrere Prozessoren beim Bestimmen der Rolleninformationen folgende Funktionen aufweisen:
Bestimmen der Rolleninformationen anhand eines Standorts der Benutzervorrichtung (205);
Identifizieren einer Virtual-Reality-Szene der Virtual-Reality-Szenen, die der Benutzervorrichtung (205) anhand der Rolleninformationen und/oder der Benutzervorrichtung (205) bereitgestellt werden, wobei die VR-Plattform (215) die Virtual-Reality-Szene identifiziert, die der bestimmten Rolle zugeordnet ist, die an dem Standort bereitgestellt werden, wobei die Virtual-Reality-Szene einer aktuellen Umgebung der Benutzervorrichtung (205) zugeordnet ist;
wobei die Virtual-Reality-Szene eine Vielzahl von Objekten beinhaltet,
wobei verschiedene Objektgruppen aus der Vielzahl von Objekten verschiedenen Rollen zugeordnet sind, wobei die verschiedenen Objektgruppen Informationen zugeordnet sind, welche die jeweiligen Rollen identifizieren, die den verschiedenen Objektgruppen zugeordnet sind;
Identifizieren einer bestimmten Objektgruppe der verschiedenen Objektgruppen, die der Benutzervorrichtung (205) als ein Teil der Virtual-Reality-Szene anhand der bestimmten Rolle bereitgestellt werden,
wobei die Benutzervorrichtung (205) physische Objekte in einer Nähe der Benutzervorrichtung (205) identifiziert, um sie als Teil der Virtual-Reality-Szene für die bestimmte Rolle bereitzustellen, wobei die physischen Objekte jeweiligen physischen Identifikatoren zugeordnet sind, die anzeigen, dass die physischen Objekte der bestimmten Rolle zugeordnet sind; und
Bereitstellen, an die Benutzervorrichtung (205), der Virtual-Reality-Szene, welche die bestimmte Objektgruppe beinhaltet, wobei die bestimmte Objektgruppe den Objekten entspricht, die in der Umgebung der Benutzervorrichtung beinhaltet sind.

9. Vorrichtung nach Anspruch 8, wobei der eine oder mehrere Prozessoren ferner folgende Funktionen aufweisen: Bereitstellen einer Benachrichtigung für die Benutzervorrichtung (205), die anzeigt, dass die Benutzervorrichtung (205) die Virtual-Reality-Szene, welche die bestimmte Objektgruppe beinhaltet, empfangen soll.

10. Vorrichtung nach Anspruch 8 oder 9, wobei die bestimmte Objektgruppe für die bestimmte Rolle relevant ist.

11. Vorrichtung nach einem der Ansprüche 8 bis 10, wobei der eine oder mehrere Prozessoren beim Bereitstellen der Virtual-Reality-Szene, welche die bestimmte Objektgruppe beinhaltet, folgende Funktionen aufweisen:
Bereitstellen der Virtual-Reality-Szene, welche die Vielzahl von Objekten beinhaltet, um der Benutzervorrichtung (205) zu ermöglichen, andere Objekte als die bestimmte Objektgruppe aus der Virtual-Reality-Szene zu filtern.

12. Vorrichtung nach einem der Ansprüchen 8 bis 11, ferner umfassend:
Empfangen von Informationen, die ein oder mehrere geänderte Objekte identifizieren, die der bestimmten Rolle zugeordnet sind; und
Bereitstellen des einen oder mehrerer geänderter Objekte für die Benutzervorrichtung (205) zur Aufnahme in die Virtual-Reality-Szene.

13. Vorrichtung nach einem der Ansprüche 8 bis 12, wobei der eine oder mehrere Prozessoren beim Bestimmen der Rolleninformationen folgende Funktionen aufweisen:
Empfangen der Rolleninformationen von der Benutzervorrichtung (205).

14. Vorrichtung nach einem der Ansprüche 8 bis 13, wobei der eine oder mehrere Prozessoren beim Bestimmen der Rolleninformationen folgende Funktionen aufweisen:
Bestimmen der Rolleninformationen anhand von Informationen, die anzeigen, dass ein Benutzer der Benutzervorrichtung (205) die Virtual-Reality-Szene gemäß einer Gruppe von Rollen, welche die bestimmte Rolle beinhaltet, betrachten soll.

## Revendications

1. Procédé (400) pour générer des scènes de réalité virtuelle en générant différentes scènes pour différents rôles, le procédé comprenant :
la réception (410), par un ou plusieurs dispositifs d'une plateforme (215) de réalité virtuelle (RV), d'informations de rôle identifiant un rôle particulier associé à un dispositif d'utilisateur (205), le dispositif d'utilisateur étant un parmi un téléphone mobile, un ordinateur portable, une tablette électronique, un ordinateur de poche, un casque de réalité virtuelle et un dispositif de réalité virtuelle ;
l'identification, par les un ou plusieurs dispositifs de la plateforme (215) de RV, d'un emplacement du dispositif d'utilisateur (205) ;
l'identification (420), par les un ou plusieurs dispositifs de la plateforme (215) de RV, d'une scène de réalité virtuelle, parmi les scènes de réalité virtuelle, à fournir au dispositif d'utilisateur (205) sur la base des informations de rôle, dans lequel la plateforme (215) de RV identifie la scène de réalité virtuelle associée au rôle particulier à fournir à l'emplacement, la scène de réalité virtuelle étant associée à un environnement courant du dispositif d'utilisateur (205) ;
les scènes de réalité virtuelle comportant une pluralité d'objets,
dans lequel différents ensembles d'objets parmi la pluralité d'objets sont associés aux différents rôles, les différents ensembles d'objets étant associés à des informations identifiant des rôles respectifs associés aux différents ensembles d'objets,
un rôle parmi les rôles respectifs étant associé à un ensemble d'objets correspondant sur la base de l'ensemble d'objets correspondant qui est important pour une personne jouant le rôle ;
l'identification (430), par les un ou plusieurs dispositifs de la plateforme (215) de RV, d'un ensemble d'objets particulier, parmi les différents ensembles d'objets, à fournir au dispositif d'utilisateur (205) en tant qu'une partie de la scène de réalité virtuelle, l'ensemble d'objets particulier étant associé au rôle particulier,
dans lequel le dispositif d'utilisateur (205) identifie des objets physiques à proximité du dispositif d'utilisateur (205) à fournir en tant que la partie de la scène de réalité virtuelle pour le rôle particulier, les objets physiques étant associés à des identifiants physiques respectifs indiquant que les objets physiques sont associés au rôle particulier ; et
la fourniture, par les un ou plusieurs dispositifs de la plateforme (215) de RV et au dispositif d'utilisateur (205), de la scène de réalité virtuelle comportant l'ensemble d'objets particulier, l'ensemble d'objets particulier correspondant aux objets compris dans l'environnement du dispositif d'utilisateur.

2. Procédé selon la revendication 1, dans lequel la fourniture de la scène de réalité virtuelle comprend :
la fourniture de la scène de réalité virtuelle comportant la pluralité d'objets pour permettre au dispositif d'utilisateur (205) de filtrer des objets autres que l'ensemble d'objets particulier de la scène de réalité virtuelle.

3. Procédé selon la revendication 1 ou 2, dans lequel un objet parmi la pluralité d'objets est associé à deux différents rôles ou plus.

4. Procédé selon l'une quelconque des revendications précédentes, dans lequel la fourniture de la scène de réalité virtuelle comportant l'ensemble d'objets particulier comprend :
la fourniture d'informations identifiant un identifiant physique parmi les identifiants physiques associé à un objet particulier de l'ensemble d'objets particulier,
l'identifiant physique correspondant à un objet physique à proximité du dispositif d'utilisateur (205), et
le dispositif d'utilisateur (205) fournissant l'objet particulier dans la scène de réalité virtuelle sur la base de la détection de l'identifiant physique.

5. Procédé selon l'une quelconque des revendications précédentes, comprenant en outre :
la réception d'une modification apportée à la scène de réalité virtuelle ;
la détermination que la modification concerne un objet particulier de l'ensemble d'objets particulier ; et
la fourniture de l'objet particulier au dispositif d'utilisateur (205) pour intégration dans la scène de réalité virtuelle sur la base de la modification.

6. Procédé selon l'une quelconque des revendications précédentes, dans lequel l'objet particulier concerne une pluralité de rôles comportant le rôle particulier ; et dans lequel le procédé comprend en outre :
l'identification d'une pluralité de dispositifs d'utilisateur (205) associés à un ou plusieurs rôles de la pluralité de rôles ; et
la fourniture de l'objet particulier à la pluralité de dispositifs utilisateurs pour intégration dans la scène de réalité virtuelle sur la base de la pluralité de dispositifs d'utilisateur (205) associés aux un ou plusieurs rôles et sur la base de la modification.

7. Produit de programme informatique comprenant des instructions pouvant être exécutées par machine résidant sur un support non transitoire lisible par ordinateur, lequel, lorsqu'il est chargé et exécuté par un processeur, amène le processeur à réaliser des opérations selon le procédé selon l'une quelconque des revendications 1 - 6.

8. Dispositif pour générer des scènes de réalité virtuelle en générant différentes scènes pour différents rôles, comprenant :
un ou plusieurs processeurs pour :
déterminer des informations de rôle identifiant un rôle particulier associé à un dispositif d'utilisateur (205), le dispositif d'utilisateur étant un parmi un téléphone mobile, un ordinateur portable, une tablette électronique, un ordinateur de poche, un casque de réalité virtuelle, et un dispositif de réalité virtuelle, où les un ou plusieurs processeurs, lorsqu'ils déterminent les informations de rôle, sont prévus pour :
déterminer les informations de rôle sur la base d'un emplacement du dispositif d'utilisateur (205) ;
identifier une scène de réalité virtuelle, parmi les scènes de réalité virtuelle, à fournir au dispositif d'utilisateur (205) sur la base des informations de rôle et/ou du dispositif d'utilisateur (205), dans lequel la plateforme (215) de RV identifie la scène de réalité virtuelle associée au rôle particulier à fournir à l'emplacement, la scène de réalité virtuelle étant associée à un environnement courant du dispositif d'utilisateur (205) ;
la scène de réalité virtuelle comportant une pluralité d'objets,
dans lequel différents ensembles d'objets, parmi la pluralité d'objets, sont associés à différents rôles, les différents ensembles d'objets étant associés à des informations identifiant des rôles respectifs associés aux différents ensembles d'objets ;
identifier un ensemble d'objets particulier, parmi les différents ensembles d'objets, à fournir au dispositif d'utilisateur (205) en tant qu'une partie de la scène de réalité virtuelle sur la base du rôle particulier,
dans lequel le dispositif d'utilisateur (205) identifie des objets physiques à proximité du dispositif d'utilisateur (205) à fournir en tant que la partie de la scène de réalité virtuelle pour le rôle particulier, les objets physiques étant associés à des identifiants physiques respectifs indiquant que les objets physiques sont associés au rôle particulier ; et
fournir, au dispositif d'utilisateur (205), la scène de réalité virtuelle, comportant l'ensemble d'objets particulier, l'ensemble d'objets particulier correspondant aux objets compris dans l'environnement du dispositif d'utilisateur.

9. Dispositif selon la revendication 8, dans lequel les un ou plusieurs processeurs ont prévus en outre pour :
fournir une notification au dispositif d'utilisateur (205) indiquant que le dispositif d'utilisateur (205) est censé recevoir la scène de réalité virtuelle comportant l'ensemble d'objets particulier.

10. Dispositif selon la revendication 8 ou 9, dans lequel l'ensemble d'objets particulier est important pour le rôle particulier.

11. Dispositif selon l'une quelconque des revendications 8 à 10, dans lequel les un ou plusieurs processeurs, lorsqu'ils fournissent la scène de réalité virtuelle comportant l'ensemble d'objets particulier, sont prévus pour :
fournir la scène de réalité virtuelle comportant la pluralité d'objets pour permettre au dispositif d'utilisateur (205) de filtrer des objets autres que l'ensemble d'objets particulier de la scène de réalité virtuelle.

12. Dispositif selon l'une quelconque des revendications 8 à 11, comprenant en outre :
la réception d'informations identifiant un ou plusieurs objets modifiés associés au rôle particulier ; et
la fourniture des un ou plusieurs objets modifiés au dispositif d'utilisateur (205) pour intégration dans la scène de réalité virtuelle.

13. Dispositif selon l'une quelconque des revendications 8 à 12, dans lequel les un ou plusieurs processeurs, lorsqu'ils déterminent les informations de rôle, sont prévus pour :
recevoir les informations de rôle du dispositif d'utilisateur (205).

14. Dispositif selon l'une quelconque des revendications 8 à 13, dans lequel les un ou plusieurs processeurs, lorsqu'ils déterminent les informations de rôle, sont prévus pour :
déterminer les informations de rôle sur la base d'informations indiquant qu'un utilisateur du dispositif d'utilisateur (205) est censé visualiser la scène de réalité virtuelle selon un ensemble de rôles qui comporte le rôle particulier.
